# EUROPEAN PATENT SPECIFICATION

(11) **EP 0 788 428 B1**
(45) Date of publication and mention of the grant of the patent: **21.02.2001**
(21) Application number: 95936183.3
(22) Date of filing: 25.10.1995
(51) Int. Cl.: B32B 27/10, B65D 65/40

(54) **A LAMINATED PACKAGING MATERIAL AND A METHOD OF PRODUCING THE MATERIAL**
MEHRSCHICHTIGES VERPACKUNGSMATERIAL UND VERFAHREN ZUR HERSTELLUNG
MATERIAU D'EMBALLAGE STRATIFIE ET PROCEDE POUR PRODUIRE CE MATERIAU

(30) Priority: 27.10.1994 SE 9403679
(43) Date of publication of application: 13.08.1997
(73) Proprietor: Tetra Laval Holdings & Finance SA, 1009 Pully (CH)
(72) Inventor: KJELGAARD, Tom, S-223 77 Lund (SE)
(74) Representative: Müller, Hans-Jürgen, Dipl.-Ing.
(86) International application number: SE9501265
(87) International publication number: WO9613380

(56) References cited:
- EP-A- 0 099 251
- EP-A- 0 313 356
- US-A- 4 584 234
- US-A- 4 787 506

## Description

### Technical Field

The present invention relates to a laminated packaging container of the type which has a core layer of paper or board and a layer of plastic material which container serves for packaging products of oil or grease.

### Background Art

In packaging technology, use is often made of packages of the single use disposable nature for packaging and transporting foods, and a very large group of these so-called single use disposable packages is produced from a laminated packaging material (packaging laminate) comprising a core layer of paper or board and a plastic layer disposed on one side of the core layer. Most generally, the other side of the core layer is also covered by a plastic layer.

The composition of the packaging laminate is based on the concept of providing the best possible protection for the product which is to be packed, at the same time as the packaging material sould be easy to produce and easy to reform, or convert, into packaging using rapid, modern packaging and filling machines which produce finished packages on a rational, industrial scale.

A packaging laminate consisting solely of paper or board and plastic, as described above, makes possible the production of mechanically strong and configurationally stable packaging containers possessing good tightness properties vis-à-vis liquids, but generally lacks tightness properties against gases and is therefore unsuitable for packaging containers for gas-sensitive products, in particular products which are sensitive to oxygen gas.

In order to supplement the packaging laminate with tightness properties against gases, in particular oxygen gas, and with grease resistance properties, it is known in the art to provide the packaging laminate with one or more additional layers of a material possessing the desired properties.

A known packaging laminate (EP-A-0313356) with grease resistance uses a core layer comprising a grease resistant paper or grease resistant board with outer plastic layers disposed on both sides of the core layer. The prior art packaging laminate offers great resistance to fatty and greasy products which cannot, or can only very slowly, penetrate into and through the grease resistant core layer of the packaging laminate. The disadvantage inherent in the prior art packaging laminate is, however, that it requires a paper or board of a special quality which is expensive and therefore contributes in making the costs of the packaging laminate unnecessarily high.

For wrapping packaging material EP-A-099 251 proposes to deposit aluminium on a film of PP resin.

### Object of the invention

An object of the present invention is to realise packaging containers which afford good protection to the packed oil- or grease-containing products without requiring special expensive paper or board qualities, resp.

### Solution

This and other objects and advantages will be attained according to the present invention as claimed in claim 1.

As a result of the packaging laminate's metal coating, which may be made very thin, the packaging container according to the present invention acquires excellent grease resistance which effectively prevents products of oils, fats or greases from penetrating through the packaging laminate. As a result of the metal coating, the packaging laminate according to the present invention will moreover be given improved gas tightness properties, in particular oxygen gas tightness, thus rendering the packaging laminate eminently suitable for packages for oxygen gas sensitive grease- and oil-containing products, for example cooking oil.

The packaging laminate places not particular demands on the paper quality in the core layer, but any optional commercially available and economical paper or board quality, respectively, may in practive be employed in a packaging laminate.

### Brief description of the accompanying drawing

The present invention will now be described in greater detail hereinbelow, with particular reference to the accompanying Drawing, in which:
Fig. 1 schematically illustrates a cross section through a a laminated packaging material of a container for e.g. cooking oil, and
Fig. 2 schematically illustrates a method of approach for producing the laminated packaging material for said container.

Before the description of the present invention continues, it should first be noted that the embodiment which is shown on the Drawing is not intended in any way to restrict the scope of the invention, but is shown merely for the purpose of illustrating the present invention in a simple and readily comprehensive manner. It will be obvious to a person skilled in the art that numerous different modifications and variations are possible. Thus, such modifications and variations lie within the scope of and are encompassed by the appended Claims.

### Description of illustrative embodiment

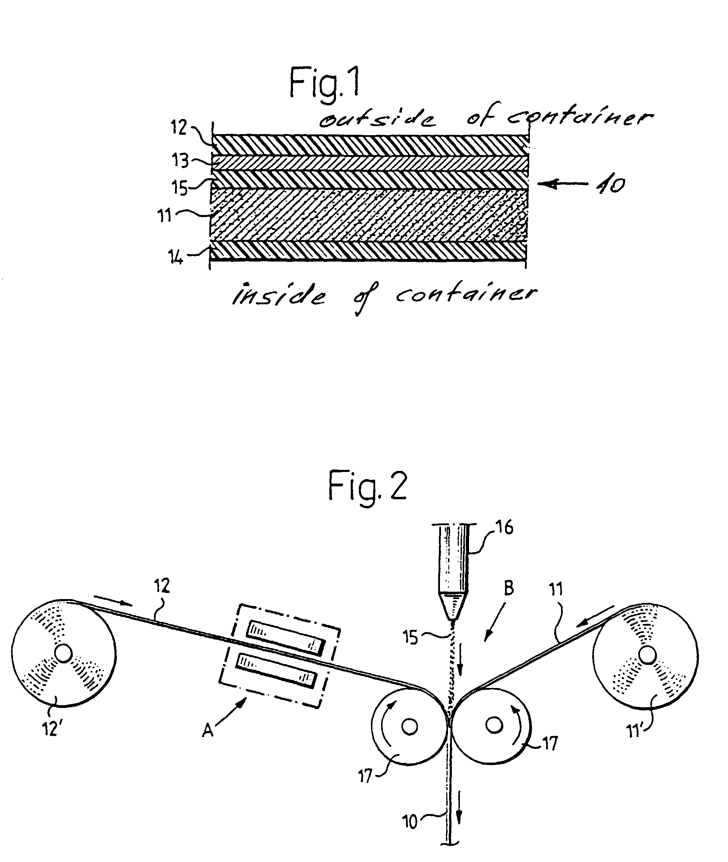

Referring to the Drawing, Fig. 1 thus schematically illustrates a cross section of a laminated packaging material (packaging laminate) carrying the general reference numeral 10.

The packaging laminate 10 comprises a core layer 11 and an outer plastic layer 12 which is disposed on the one side of the core layer 11 and which, in the illustrated embodiment, lies above the core layer 11. Between the core layer 11 and the outer plastic layer 12, there is disposed a coating 13 of metal which, by a conventional vacuum deposition technique, is desposited on and bonded to the outer plastic layer 12. The packaging laminate 10 can also include a further outer plastic layer 14 which is provided on the other side of the core layer 11, i.e. on that side which, in the illustrated embodiment, is turned to face downwards.

The outer plastic layer 12 with the vacuum-deposited coating 13 of metal is laminated or bonded to the subjacent core layer 11 by means of a layer of adhesive or sealing plastic 15 disposed between the core layer 11 and the coating 13 and capable of binding with good adhesion (high adhesive strength) to both coating 13 and the core layer 11, for the formation of a mechanically strong and durable sealing joint or seam between the two surrounding laminate layers 12 and 14.

The core layer 11 consists of a fibre material, for example paper or board, of any optional commercially available quality, without any demands that the fibre material possess any specific chemical and/or optic properties. However, one requirement which the core layer 11 must satisfy is that it must impart to the packaging laminate 11 the requisite mechanical rigidity and strength so as to make possible the production of dimensionally stable packaging containers from the packaging laminate 10. According to the present invention, the core layer 11 may thus consist of conventional paper or board qualities which are normally employed in packaging technology for producing consumer packages of the single-use nature (single-use-disposable packages) for liquid foods.

The outer plastic layer 12 on the upper side of the packaging laminate 10 in Fig. 1 may, in principle, consist of any known plastic material whatever which imparts to the packaging laminate 10 tightness properties against liquids, but preferably consists of a thermoplastic material which, in addition to good liquid-tightness properties, also possesses the advantageous property that it may be sealed by so-called heat sealing under which facing plastic layers are, by the supply of heat and pressure, brought to surface fusion with one another for the formation of liquid-tight, mechanically strong and durable sealing joints or seams between the plastic layers.

Examples of appropriate heat-sealable plastic which may be employed for the outer plastic layer 12 in the packaging laminate 10 according to the present invention are: LDPE (Low Density Polyethylene), HDPE (High Density Polyethylene), PP (Polypropylene) and PET (PolyEthyleneTerephthalate).

The coating 13 of metal on the outer plastic layer 12 between the core layer 11 and the outer plastic layer 12 in the packaging laminate 10 is, as has already been mentioned, a metal film produced by conventional vacuum deposition, and bonded by good adhesion (high adhesive strength) to the outer plastic layer 12 serving as substrate for the metal film. The present invention is not restricted to any one particular of several known and commercially available vacuum deposition techniques for producing the metal coating 13, although the so-called CVPD (Chemical Vapour Plasma Deposition) technique has given positive and purposeful results in practical experiments which have been carried out in accordance with the present invention.

Using such known vacuum deposition techniques, it is possible to produce extremely thin, but still very dense and tight coatings 13 of metal and, according to the present invention, the thickness of the coating 13 may vary within a relatively wide span between in themselves very low limit values. A practically well-functioning thickness range for the metal coating 13 is from 10-80 nm, preferably 30-50 nm, for example 40 nm.

The material in the coating 13 may be of any suitable metal or other inorganic chemical compound which, in a very thin layer, can be deposited on the outer plastic 12 by vacuum deposition.

An example or a preferred metal is aluminium which, at such a slight thickness as 10-80 nm give dense, tight continuous coatings possessing good tightness properties against gases, in particular oxygen gas, and the desired protection against penetration of oil and grease. A metal coating 13 of aluminium moreover imparts to be packaging laminate 10 according to the present invention a beautifully silver sheen appearance through the transparent outer plastic layer 12 from the upper side of the packaging laminate 10 in Fig. 1.

An example of one such other inorganic chemical compound as may be employed in the coating 13 is a silicon compound possessing the general chemical formula SiOₓ where x may vary between 1.5 and 2.2.

In order further to improve the appearance of the packaging laminate, the packaging laminate 10 may be decor printed in patterns on the outer plastic layer 12, the decor print being freely optional in its patterns and colours in order to provide, in a decorative and attractive way, information about the products which is packed in a packaging container produced from the packaging laminate 10.

As has been pointed out above, it is desirable to protect the core layer 11 from liquid which may readily penetrate into the absorbent paper or board material and render the packaging laminate slack and unusable. From the upper side of the packaging laminate 10 in Fig. 1, the core layer 11 is totally concealed and protected against both liquids and grease and oil, as a result of the outer plastic layer 12 and the metal coating 13, respectively. In order to protect the core layer 11 also from the under side of the packaging laminate 10 in Fig. 1 against the penetration of, at least liquid and other moisture, the packaging laminate 10 according to the present invention is preferably provided with an additional plastic layer 14 on the other side of the core layer 11.

The material in this additional plastic layer 14 may be any optional plastic possessing tightness properties against liquid, but is preferably a thermoplastic which may readily be sealed to the other outer plastic layer 12 by heat sealing in order to make possible the production of liquid-tight, mechanically strong and durable selaing joints or seams during reforming of the packaging laminate into dimensionally stable packaging containers. Examples of suitable thermoplastics for the plastic layer 14 are theose which were already mentioned in connection with the plastic layer 12.

The packaging laminate 10 is e.g. produced in the manner which is schematically illustrated in Fig. 2. In order to facilitate a comparison with Fig. 1, the same reference numerals as in Fig. 1 have also been employed in Fig. 2 for identical or corresponding parts.

A web of plastic 12 (corresponding to the outer plastic layer 12 in Fig. 1) is unreeled from a magazine reel 12' (in the left-hand part of Fig. 2), and ist led into a treatment or coating station carrying the general reference designation A in which the plastic web 12 is coated on its one side with a thin coating material, e.g. aluminium (corresponding to the metal coating 13), by conventional vacuum deposition technology.

From the station A, the thus unilaterally metal-coated plastic web 12 is led further to a lamination station carrying the general reference designation B where the plastic web is united with and bonded to a paper or board web (corresponding to the paper or board layer 11), with the aid of an adhesive or a sealing plastic 15 which is applied between the two webs 12 and 13 by means of an extruder 16 disposed above the webs and extruding a thin film of the adhesive or sealing plastic, respectively, to the metal-coated side of the plastic web 12. The converging webs 11 and 12 with interjacent adhesive or sealing plastic 15 are led into and through the nip between two non-slip cooling rollers 17, 17 rotating beneath the extruder 16 and, with light pressure towards one another, compressing the two webs during cooling, for the formation of the finished, well-integrated packaging laminate 10.

Even though the foregoing production process has been described as a continous, unbroken process, it need not be carried out in-line as illustrated. Instead of leading the metal-coated plastic web 12 from the treatment/coating station A direct to the lamination station B, it can if desired, be rolled up for temporary storage or transport before being laminated to a paper or board web. Such may be the case when, for example, the coating station A and the lamination station B are located geographically apart form one another.

From the finished, laminated packaging material 10 dimensionally stabel consumer packages of the single-use type are produced, for example Tetra Brik^{®} for oil- and grease-containing products, for example cooking oil which, with good shelf life, may be stored in the packaging containers without the packaging material of the packages running the risk of being destroyed or damaged by the packed products and without the appearance of the packages being impaired or harmed as a result of oil or grease spots deriving from products which have penetrated through the core layer of the packaging material.

In a packaging container according to the present invention if it is to be employed for packing oil- and grease-containing products the metal-coated outer plastic layer is to be turned to face outwards and form the outside of the packaging container, whereby the paper or board layers on the packaging material lie well concealed from view behind the protective, preferably silver shining metal coating.

As will have been apparent from the foregoing disclosure, the present invention, as defined in the appended Claims, realises an efficient and economical packaging container for packages for oil- and grease-containing products. The packaging laminate thereof is easy to produce employing already extant, conventional apparatuses and techniques. In particular, the present invention realises consumer packages of the single-use type for such products may be manufactured with the aid of modern, rapid packaging machines which produce packages on a rational, industrial scale. The perhaps most important contribution to the state of the art is that the present invention makes possible the production of paper or board-based packaging containers which affort good protection to the packed oil- or grease-containing products without requiring special, expensive paper or board qualities, reapectively.

## Claims

1. Packaging container for products from oil or grease, consisting of a laminated packaging material comprising
a core layer (11) of paper or board
a layer (12) of plastic disposed on the one side of said core layer (11)
and a coating (13) of metal or of an inorganic compound on that side of plastic layer (12) facing towards the core layer (11)
wherein the paper or board layer (11) of the laminated packaging material (1) forms the inside of the packaging container.

2. Packaging container as claimed in claim 1, characterized in that said coating (13) on that side of said plastic layer (12) is a vacuum deposited coating comprising a thickness of between 10 and 80 nm.

3. Packaging container as claimed in claim 1 or 2,
characterized in that said plastic layer (12) consists of LDPE, HDPE, PP and/or PET.

4. Packaging container as claimed in one of the preceeding claims, characterized in that said coating (13) comprises aluminium.

5. Packaging container as claimed in one of claims 1 to 3, characterized in that said coating (13) comprises SiOₓ (x may vary between 1.5 and 2.2)

## Patentansprüche

1. Verpackungsbehälter für Öle oder Fette aufweisende Produkte mit einem laminierten Verpackungsmaterial, das eine Kernschicht (11) aus Papier oder Pappe, eine Kunststoffschicht (12) an einer Seite der Kernschicht (11) und einen Überzug (13) aus Metall oder einer anorganischen Komponente auf derjenigen Seite der Kunststoffschicht (12) aufweist, welche der Kernschicht (11) zugewandt ist, bei dem die Kernschicht (11) aus Pappe oder Papier des laminierten Verpakkungsmaterials (1) die Innenseite des Verpackungsbehälters bildet.

2. Verpackungsbehälter nach Anspruch 1,
**dadurch gekennzeichnet**,
daß der an der einen Seite der Kunststoffschicht (12) angeordnete Überzug (13) ein im Vakuum niedergeschlagener bzw. abgeschiedener Überzug mit einer Schichtdicke zwischen 10 und 80 nm ist.

3. Verpackungsbehälter nach Anspruch 1 und 2,
**dadurch gekennzeichnet,**
daß die Kunststoffschicht (12) aus LDPE, HDPE, PP und/oder PET besteht.

4. Verpackungsbehälter nach einem der vorhergehenden Ansprüche,
**dadurch gekennzeichnet,**
daß der Überzug (13) Aluminium aufweist.

5. Verpackungsbehälter nach einem der Ansprüche 1 bis 3,
**dadurch gekennzeichnet,**
daß der Überzug (13) SiOₓ aufweist, wobei x zwischen 1,5 und 2,2 beträgt.

## Revendications

1. Récipient d'emballage pour produits à base d'huile ou de graisse, consistant en un matériau d'emballage stratifié comprenant une couche noyau (11) de papier ou de carton
une couche (12) de matière plastique disposée sur un premier côté de ladite couche noyau (11)
et un revêtement (13) de métal ou d'un composant inorganique sur le côté de la couche de matière plastique (12) regardant vers la couche noyau (11)
dans lequel la couche de papier ou de carton (11) du matériau d'emballage stratifié (1) forme la face intérieure du récipient d'emballage.

2. Récipient d'emballage selon la revendication 1, caractérisé en ce que ledit revêtement (13) sur ce côté de ladite couche de matière plastique (12) est un revêtement déposé sous vide ayant une épaisseur entre 10 et 80 nm.

3. Récipient d'emballage selon la revendication 1 ou 2, caractérisé en ce que ladite couche de matière plastique (12) est en polyéthylène basse densité (PEBD), en polyéthylène haute densité (PEHD), en polypropylène (PP) et/ou en polyéthylènetéréphthalate (PET).

4. Récipient d'emballage selon l'une des revendications précédentes, caractérisé en ce que ledit revêtement (13) comprend de l'aluminium.

5. Récipient d'emballage selon l'une des revendications 1 à 3, caractérisé en ce que ledit revêtement (13) comprend SiOₓ (x pouvant varier entre 1,5 et 2,2).
